# EUROPÄISCHE PATENTSCHRIFT

(11) **EP 0 771 441 B1**
(45) Veröffentlichungstag und Bekanntmachung des Hinweises auf die Patenterteilung: **28.10.1998**
(21) Anmeldenummer: 95924845.1
(22) Anmeldetag: 07.07.1995
(51) Int. Cl.: G06F 7/60, G05B 13/02

(54) **VERFAHREN UND ANORDNUNG ZUR ANWENDUNG VON FUZZY-LOGIK BEI AUTOMATISIERUNGSSYSTEMEN**
METHOD AND ARRANGEMENT FOR USING FUZZY LOGIC IN AUTOMATION SYSTEMS
PROCEDE ET DISPOSITIF POUR L'APPLICATION DE LOGIQUE FLOUE DANS DES SYSTEMES D'AUTOMATISATION

(30) Priorität: 20.07.1994 DE 4425674
(43) Veröffentlichungstag der Anmeldung: 07.05.1997
(73) Patentinhaber: SIEMENS AKTIENGESELLSCHAFT, 80333 München (DE)
(72) Erfinder: FURUMOTO, Herbert, D-91054 Erlangen (DE); WOLF, Thomas, D-91334 Hemhofen (DE)
(86) Internationale Anmeldenummer: DE9500894
(87) Internationale Veröffentlichungsnummer: WO9602880

(56) Entgegenhaltungen:
- EP-A- 0 489 913
- US-A- 5 295 061
- EMERGENT INNOVATIONS ON INFORMATION TRANSFER PROCESSING AND DECISIO MAKING, CHICAGO, OCT. 18 - 21, 1992, Bd. 2 OF 2, 18.Oktober 1992 INSTITUTE OF ELECTRICAL AND ELECTRONICS ENGINEERS, Seiten 1603-1608, XP 000367008 JIN ZHENG ET AL 'STFC - SELF-TUNING FUZZY CONTROLLER'
- COMPUTERS IN INDUSTRY, Bd. 22, Nr. 3, 1.Oktober 1993 Seiten 249-261, XP 000396462 CHIEH-LI CHEN ET AL 'SELF-ORGANIZING FUZZY LOGIC CONTROLLER DESIGN'
- FUZZY SETS AND SYSTEMS, Bd. 56, Nr. 3, 25.Juni 1993 Seiten 281-290, XP 000380870 ATHALYE A ET AL 'ON DESIGNING A FUZZY CONTROL SYSTEM USING AN OPTIMIZATION ALGORITHM'
- PROCEEDINGS OF THE INTERNATIONAL CONFERENCE ON FUZZY SYSTEMS, SAN DIEGO, MAR. 8 - 12, 1992, Nr. CONF. 1, 8.März 1992 INSTITUTE OF ELECTRICAL AND ELECTRONICS ENGINEERS, Seiten 83-91, XP 000342866 HE S Z ET AL 'DESIGN OF AN ON-LINE RULE-ADAPTIVE FUZZY CONTROL SYSTEM'
- AUTOMATISIERUNGSTECHNISCHE PRAXIS - ATP, Bd. 36, Nr. 7, 1.Juli 1994 MUNCHEN DE, Seiten 42-49, U. VON DÖLLEN ET AL. 'ÜBERGEORDNETE REGELUNG EINES HOCHDRUCK-GASVERTEILUNGSNETZES MIT HILFE DER FUZZY-LOGIK'
- PATENT ABSTRACTS OF JAPAN vol. 16 no. 68 (P-1314) ,19.Februar 1992 & JP,A,03 260805 (FUJITSU LTD) 20.November 1991,

## Beschreibung

Die Erfindung bezieht sich auf ein Verfahren zur Anwendung von Fuzzy-Logik bei Automatisierungssystemen, wobei Zugehörigkeitsfunktionen für einzelne linguistische Variable festgelegt werden und weitere Elemente des Fuzzy-Systems, wie Zugehörigkeitsfunktionen, Regeln, Regelgewichte od. dgl., veränderbar ausgelegt sind. Daneben bezieht sich die Erfindung auch auf eine zugehörige Anordnung zur Durchführung dieses Verfahrens, mit wenigstens einem Fuzzy-System mit Eingängen und Ausgängen und einem übergeordneten Kontrollsystem zur Verstellung der Parameter des Fuzzy-Systems.

Bei der Verwendung von Fuzzy-Logik für Automatisierungssysteme erfolgt üblicherweise die Fuzzyfizierung mit den sogenannten linguistischen Variablen, die beispielsweise als "sehr gering", "gering", " normal", "erhöht", "sehr erhöht" und "kritisch" definiert sind. Die bisher in Automatisierungssystemen eingesetzten Fuzzy-Systeme gehen dabei für die einzelnen linguistischen Variablen jeweils von einmal fest vorgegebenen Zugehörigkeitsfunktionen aus, die vor dem Einsatz des Fuzzy-Systems hinsichtlich Form und Wertebereich festgelegt werden.

Aus der Literaturveröffentlichung "EMERGENT INNOVATIONS ON INFORMATION TRANSFER PROCESSING AND DECISION MAKING", Chicago, Oct. 18-21, 1992, ist ein Fuzzy-Regler für nicht genauer definierte Anwendungen beschrieben, bei dem ein sogenannter Supervisor als übergeordnetes Kontrollsystem vorhanden ist. Damit soll ein selbstregelnder Fuzzy-Regler (Self-Tuning Fuzzy Controller) geschaffen sein, mit dem entsprechend dem Verfahren der eingangs genannten Art gearbeitet werden kann. Weiterhin ist aus ATP, Bd. 36, Nr. 7 (1994), Seiten 42-49, eine übergeordnete Regelung eines Hochdruck-Gasverteilungsnetzes mit Hilfe der Fuzzy-Logic bekannt. Dabei ist der Fuzzy-Regler konventionell aufgebaut. Schließlich ist aus der JP-A 0 326 805 ein Fuzzy-System bekannt, bei dem die Gewichte von Regeln oder anderweitige Parametrierungen der Zugehörigkeitsfunktionen online durch aufgeschaltete Prozeßgrößen vorgenommen werden.

Es hat sich aber gezeigt, daß für bestimmte Anwendungsfälle in der Industrie die Systeme des Standes der Technik noch nicht in optimaler Weise geeignet sind.

Aufgabe der Erfindung ist es daher, ein verbessertes Verfahren zur Anwendung von Fuzzy-Logic bei Automatisierungssystemen zu geben.

Die Aufgabe ist erfindungsgemäß bei einem Verfahren der eingangs genannten Art dadurch gelöst, daß zur online-Veränderung der Zugehörigkeitsfunktionen während des Betriebes des Automatisierungssystems die Zugehörigkeitsfunktionen nach Maßgabe wenigstens eines extern eingebbaren Parameters gleichzeitig verstellt werden. Vorzugsweise werden die Parameter mit einem Faktor multipliziert, der insbesondere auch nichtlinear auf einzelne Zugehörigkeitsfunktionen wirken kann. Zur Verstellung der Begrenzungen können in diesem Zusammenhang in bekannter Weise ein externes Stellsignal, insbesondere eine Meßgröße, herangezogen werden.

Das erfindungsgemäße Verfahren läßt sich vorteilhaft einerseits bei einem System zur Energieverteilung in Industrieanlagen, insbesondere in Papierfabriken, anwenden. Andererseits ist es gleichermaßen vorteilhafterweise für eine Anwendung zur Regelung von Stoffkreisläufen bei Industrieanlagen, insbesondere zur Optimierung von Wasserkreisläufen einsetzbar.

Bei der zugehörigen Anordnung der eingangs genannten Art zur Durchführung des erfindungsgemäßen Verfahrens enthält der die Fuzzyfizierung durchführende Softwaremodul wenigstens einen zusätzlichen Eingang und sind über diesen Eingang die Parameter der Zugehörigkeitsfunktionen, insbesondere die Begrenzungen, entsprechend veränderbar. Ebenso gut ist es auch möglich, daß mit zusätzlichen Eingängen die Gewichte von Fuzzy-Regeln oder anderweitigen Parametrierungen der Zugehörigkeitsfunktionen, die sowohl die Form als auch die Lage charakterisieren, durch aufgeschaltete Prozeßgrößen oder durch anderweitige Verfahren, z.B. Optimierungsverfahren, ermittelte Größen berücksichtigt werden.

Als übergeordnete Kontrollsysteme zur Verstellung der Parameter des Fuzzy-Systems können vorteilhafterweise Optimierungssysteme eingesetzt werden. Dafür eignen sich beispielsweise Expertensysteme, Neuronale Netze oder solche Systeme, die von genetischen Algorithmen Gebrauch machen.

Weitere Einzelheiten und Vorteile der Erfindung ergeben sich aus der nachfolgenden Figurenbeschreibung von Ausführungsbeispielen anhand der Zeichnung in Verbindung mit den weiteren Patentansprüchen. Es zeigen:
- FIG 1: ein erweitertes Fuzzy-System,
- FIG 2: das Beispiel des Verstellens einer Zugehörigkeitsfunktion,
- FIG 3a) und 3b): zwei Möglichkeiten für online zu verändernde Parameter einer Zugehörigkeitsfunktion,
- FIG 4: ein Beispiel des gleichzeitigen nichtlinearen Dehnens und/oder Stauchens aller Zugehörigkeitsfunktionen,
- FIG 5: eine zusätzliche Möglichkeit der Online-Modifizierung bei der Defuzzyfizierung und
- FIG 6: ein Fuzzy-System gemäß FIG 1 mit zusätzlichem Kontrollsystem.

Gleiche Funktionseinheiten haben in den einzelnen Figuren gleiche Bezugszeichen.

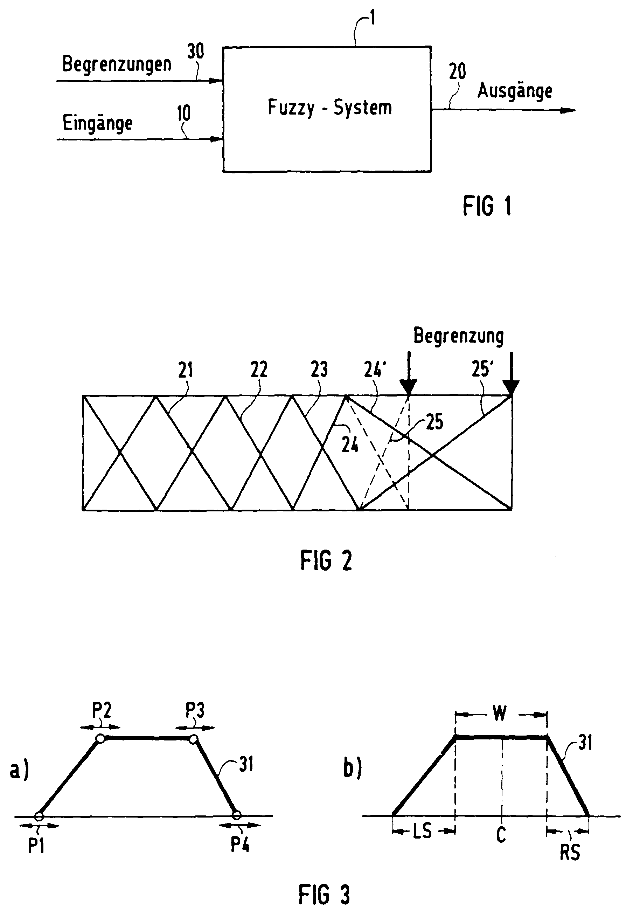

In FIG 1 kennzeichnet 1 ein bekanntes Fuzzy-System, das im wesentlichen aus einem Software-Modul zur Durchführung der Fuzzyfizierung einerseits und Defuzzifizierung andererseits besteht. Ein solches Software-Modul hat üblicherweise mehrere Eingänge 10 und Ausgänge 20.

In Ergänzung eines solchen bekannten Systems enthält der Software-Modul 1 zusätzliche Eingänge 30 für Begrenzungen. Damit kann die Fuzzyfizierung und Defuzzyfizierung derart verändert werden, daß die obere Begrenzung der Zugehörigkeitsfunktion entsprechend diesem Eingang verschoben wird.

Ein so beschriebenes System wird beispielsweise bei der Energieverteilung in Fabriken angewendet, bei der zur Energieoptimierung die Energiebezüge der Gesamtfabrik und die Energieentnahmen der einzelnen Teilanlagen fuzzifiziert werden. Z.B. erfolgt dort die Fuzzyfizierung mit den linguistischen Variablen "sehr gering", "gering", "normal", "erhöht", "sehr erhöht" und "kritisch". Da bei solchen Systemen Grenzen für den kritischen Zustand des Energiebezuges stark von der Energiesituation im öffentlichen Netz abhängt, wobei Spitzenzeiten zu berücksichtigen sind, ist es für die Fuzzy-Logik vorteilhaft, wenn insbesondere die Grenze für den kritischen Energiebezug extern verstellbar ist. Gleichermaßen ist bei der Energieverteilung auf die einzelnen Teilanlagen die Grenze für den Zustand "kritisch", d.h. die Energieentnahme über den erlaubten Limit, eine Größe, die sich häufig ändert.

Letzteren Sachverhalt wird in der FIG 2 Rechnung getragen, wobei speziell die Zugehörigkeitsfunktion für den Energiebezugszustand "kritisch" in ihrer Begrenzung variabel ist. Somit kann den aktuellen Gegebenheiten besser Rechnung getragen werden.

Ein im Prinzip ähnliches Problem ergibt sich bei der Optimierung der Wasserkreisläufe einer komplexen Produktionsanlage. In solchen Anlagen hängen sowohl die erlaubten Wasserentnahme als auch die erlaubte Abwassermenge von der Gesamtsituation, beispielsweise von den meteorologischen Randbedingungen wie Trockenheit und/oder Regenfällen, ab. In einer solchen Situation ist es vorteilhaft, wenn die Grenze für die Zugehörigkeitsfunktion der linguistischen Variablen "kritisch" und "normal" online, d.h. während des Produktionsbetriebes der Anlage, verändert werden kann.

In weiteren Ausführungsformen können sich andere vorteilhafte Anwendungen ergeben: In FIG 3a und 3b ist jeweils ein Graph 31 dargestellt, aus dem sich im einzelnen die Anzahl der extern vorgegebenen Parameter für die Lage und die Form von Zugehörigkeitsfunktionen ergibt.

Die durch den Graph 31 repräsentierte trapezförmige Zugehörigigkeitsfunktion wird gemäß FIG 3a durch die vier Eckpunkte P1, P2, P3 und P4 beschrieben, die jeweils horizontal verschiebbar sind Alternativ dazu können gemäß Figur 3b) das Zentrum C, die Breite der Schultern LS (linke Schulter) und RS (rechte Schulter) und die Breite W für sich jeweils veränderbar sein.

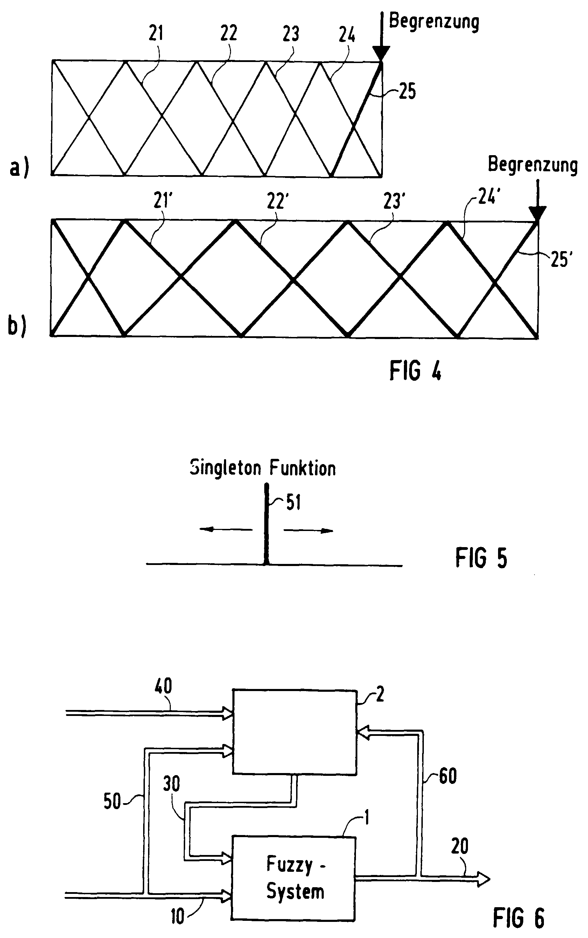

Aus FIG 4 ist ersichtlich, daß die Anzahl der ausgewählten extern gesteuerten Zugehörigkeitsfunktionen variabel sein können. Es können eine, mehrere oder alle Zugehörigkeitsfunktionen extern verstellt werden. Weiterhin ist die Art und Weise der Festlegung der Begrenzungen variabel. Die Begrenzungen können von Hand am Automatisierungssystem vorgegeben werden oder aber auch insbesondere durch ein automatisch aufgeschaltetes externes Signal, wie insbesondere eine Meßgröße, vorgegeben sein. Darauf wird anhand FIG 6 noch im einzelnen eingegangen.

Daneben ist eine Anpassung der Zugehörigkeitsfunktionen bei der Defuzzifizierung durch Prozeßsignale möglich. Die Anpassung der Zugehörigkeitsfunktion kann entweder durch Variation der Parameter entsprechend FIG 3a und FIG 3b oder-durch Anwendung der Singleton-Funktion erfolgen. Letzteres wird anhand Figuren 5 verdeutlicht, in welcher ein Graph 51 die sogenannte Singleton-Funktion wiedergibt. Die Singleton-Funktion 51 in FIG 5 ist ihrer Lage veränderbar. Letzteres hat Bedeutung bei einer Online-Modifizierung der Defuzzyfizierung. Es können so in Abhängigkeit von Prozeßsignalen die Zugehörigkeitsfunktionen derart modifiziert werden, daß eine jeweils optimale Anpassung an den laufenden Prozeß erfolgt. Wenn beispielsweise in einem Kühlsystem ein kritischer Prozeßzustand auftritt, wird die Zugehörigkeitsfunktion für den Zustand "Ventil = zu" vom Punkt 0 % auf z.B. 10 % verschoben. Dadurch kann erreicht werden, daß in diesem Zustand ständig ein Kühlstrom gewährleistet ist.

Außer den Maßzahlen der Zugehörigkeitsfunktionen können auch die Gewichte von spezifischen Fuzzy-Regeln oder anderweitige Parametrierungen der Zugehörigkeitsfunktionen online im Produktionsbetrieb durch aufgeschaltete Größen eingestellt werden. In diesem Fall werden über den zusätzlichen Eingang 30 des Fuzzy-Systems 1 gemäß FIG 1 entsprechende Größen eingegeben. Für einen Prozeßzustand "normal" kann beispielsweise die Gewichtung der Regeln anders erfolgen als im Prozeßzustand "kritisch". Die Eingänge 30 können sowohl Prozeßmeßgrößen, aus Prozeßmeßgrößen abgeleitete Größen aber auch aus speziellen Berechnungen oder Optimierungsverfahren bzw. einem übergeordneten Fuzzy-System stammende Größen sein.

Bei der Bewertung von Prozeßzuständen wie insbesondere "normal" bzw. "kritisch" ist der Einsatz eines übergeordneten Optimierungssystems besonders vorteilhaft, was anhand Figur 6 wiedergegeben ist: Dem Fuzzy-System 1 mit den Eingängen 10 und den Ausgängen 20 ist hier ein zusätzliches Kontrollsystem 2 übergeordnet, das als Supervisionssystem dient. Die Einstellung der Parameter der Zugehörigkeitsfunktion, welche über den Eingang 30 zugeführt werden, werden vorteilhafterweise von diesem übergeordneten Kontrollsystem 2 vorgenommen. Dazu sind über die Informationskanäle der Figur 1 weitere Informationskanäle 40 und 50 vorhanden, wobei auch die Ausgangsinformation über einen zusätzlichen Kanal 60 in das Kontrollsystem 2 zurückgekoppelt wird.

Das Kontrollsystem 2 überwacht die Eingänge und/oder die Ausgänge des Fuzzy-Systems 1, für das die Parametereinstellung erfolgen soll. Vorteilhaft ist dazu die Zuführung weiterer Eingangsinformation über den Zustand des zu steuernden Prozesses bzw. der Anlage, um im Kontrollsystem 2 die Strategien der Parametereinstellung bearbeiten zu können.

Daneben kann das Optimierungssystem in Figur 6 beispielsweise in Form eines Expertensystems realisiert sein. Alternativ ist die Realisierung in Form eines weiteren Fuzzy-Systems und/ oder eines neuronalen Netzes und/oder eines Optimierungssystems mit genetischen Algorithmen möglich.

## Patentansprüche

1. Verfahren zur Anwendung von Fuzzy-Logik bei Automatisierungssystemen, wobei im Fuzzy-System Zugehörigkeitsfunktionen für einzelne linguistische Variable festgelegt werden und weitere Elemente des Fuzzy-Systems, wie Zugehörigkeitsfunktionen, Regeln, Regelgewichte od. dgl. veränderbar ausgelegt sind, **dadurch gekennzeichnet**, daß zur online-Veränderung der Zugehörigkeitsfunktionen während des Betriebes der Automatisierungsanlage die Zugehörigkeitsfunktionen nach Maßgabe wenigstens eines extern eingebbaren Parameters gleichzeitig verstellt werden.

2. Verfahren nach Anspruch 1, **dadurch gekennzeichnet**, daß die Parameter mit einem Faktor multipliziert werden, der insbesondere auch nichtlinear auf einzelne Zugehörigkeitsfunktionen wirken kann.

3. Verfahren nach Anspruch 1, **dadurch gekennzeichnet**, daß zur Verstellung der Begrenzungen ein externes Stellsignal, insbesondere eine Meßgröße, herangezogen wird.

4. Verfahren nach Anspruch 1, **gekennzeichnet** in der Anwendung für ein System zur Energieverteilung in Industrieanlagen, insbesondere in Papierfabriken.

5. Verfahren nach Anspruch 4, **dadurch gekennzeichnet**, daß die Grenze der linguistischen Variablen für kritische Werte des Energiebezugs zur Berücksichtigung der Energiesituation im öffentlichen Netz extern verstellbar ist.

6. Verfahren nach Anspruch 1, **gekennzeichnet** in der Anwendung zur Regelung von Stoffkreisläufen bei Industrieanlagen, insbesondere zur Optimierung der Wasserkreisläufe in Papierfabriken.

7. Anordnung zur Durchführung des Verfahrens nach Anspruch 1 oder einem der Ansprüche 2 bis 6, mit wenigstens einem Fuzzy-System mit Eingängen und Ausgängen und einem übergeordneten Kontrollsystem zur Verstellung der Parameter des Fuzzy-Systems, **dadurch gekennzeichnet**, daß ein die Fuzzyfizierung durchführendes Softwaremodul (1) wenigstens einen zusätzlichen Eingang (30) enthält und daß über diesen Eingang (30) die Parameter der zugehörigkeitsfunktion, insbesondere die Begrenzungen, entsprechend veränderbar sind.

8. Anordnung nach Anspruch 7, **dadurch gekennzeichnet**, daß über den zusätzlichen Eingang (30) die Gewichte von Fuzzy-Regeln oder anderseitige Parametrierungen der Zugehörigkeitsfunktionen durch aufgeschaltete Prozeßgrößen verändert werden.

9. Anordnung nach Anspruch 7, **dadurch gekennzeichnet**, daß das übergeordnete Kontrollsystem als Optimierungssystem (2) ausgelegt ist.

10. Anordnung nach Anspruch 9, **dadurch gekennzeichnet**, daß das Optimierungssystem (2) als Expertensystem und/oder Fuzzy-System und/oder Neuronales Netz und/oder System mit genetischen Algorithmen realisiert ist.

11. Anordnung nach Anspruch 8, **dadurch gekennzeichnet**, daß das Optimierungssystem (2) zur Entscheidungsfindung die Eingangs- und/oder Ausgangsgrößen des Fuzzy-Systems (1) und/oder weitere zusätzliche Prozeßinformationen erhält.

## Claims

1. A process for the use of fuzzy logic in automation systems, wherein in the fuzzy system association functions for individual linguistic variables are defined and further elements of the fuzzy system, such as association functions, rules, rule weightings or the like, are designed to be modifiable, characterised in that for the on-line modification of the association functions during the operation of the automation system, the association functions are simultaneously adjusted in accordance with at least one parameter which can be input externally.

2. A process according to Claim 1, characterised in that the parameters are multiplied by a factcr which can influence individual association functions, in particular also in non-linear manner.

3. A process according to Claim 1, characterised in that an external control signal, in particular a measured variable, is used for the adjustment of the limits.

4. A process according to Claim 1, characterised by its use for a power distribution system in industrial plants, in particular in paper mills.

5. A process according to Claim 4, characterised in that the limit of the linguistic variables for critical values of the power consumption is externally adjustable in order to take into account the power situation in the public network.

6. A process according to Claim 1, characterised by its use for the control of material circulation systems in industrial plants, in particular for optimising the water circulation systems in paper mills.

7. An arrangement for the implementation of the process according to Claim 1 or one of Claims 2 to 6, comprising at least one fuzzy system with inputs and outputs and a superordinate control system for adjusting the parameters of the fuzzy system, characterised in that a software module (1) which performs the fuzzification comprises at least one additional input (30) and that via this input (30) the parameters of the association function, in particular the limits, can be modified appropriately.

8. An arrangement according to Claim 7, characterised in that via the additional input (30) the weightings of fuzzy rules or other parameterizations of the association functions are modified by applied process variables.

9. An arrangement according to Claim 7, characterised in that the superordinate control system has the form of an optimization system (2).

10. An arrangement according to Claim 9, characterised in that the optimization system (2) is implemented as an expert system and/or fuzzy system and/or neural network and/or a system using genetic algorithms.

11. An arrangement according to Claim 8, characterised in that for the decision making the optimization system (2) is supplied with the input- and/or output variables of the fuzzy system (1) and/or with further additional items of process information.

## Revendications

1. Procédé pour appliquer la logique floue à des systèmes d'automatisation, des fonctions d'appartenance pouvant être fixées dans le système flou pour une variable linguistique individuelle et des éléments supplémentaires du système flou, comme des fonctions d'appartenance, des règles, des pondérations de règles ou analogues, étant conçus de manière qu'on puisse les faire varier, caractérisé en ce que, pour la modification en ligne des fonctions d'appartenance pendant le fonctionnement de l'installation d'automatisation, on fait varier simultanément les fonctions d'appartenance suivant la donnée d'au moins un paramètre pouvant être entrée de manière externe.

2. Procédé suivant la revendication 1, caractérisé en ce que: l'on multiplie les paramètres par un facteur qui agit notamment aussi de manière non linéaire sur des fonctions d'appartenance individuelles.

3. Procédé suivant la revendication 1, caractérisé en ce que. pour faire varier les délimitations, on utilise un signal réglant externe. notamment une valeur de mesure.

4. Procédé suivant la revendication 1, caractérisé par l'application à un système de répartition d'énergie dans des installations industrielles, notamment dans des fabriques de papier.

5. Procédé suivant la revendication 4, caractérisé en ce que. pour prendre en compte la situation d'énergie dans le réseau public, on peut faire varier de manière externe la limite des variables linguistiques pour des valeurs critiques du rapport d'énergie.

6. Procédé suivant la revendication 1, caractérisé par l'application à la régulation de circuits de matière dans des installations industrielles, notamment pour optimiser le circuit d'eau dans des fabriques de papier.

7. Dispositif pour la mise en oeuvre du procédé suivant la revendication 1 ou l'une des revendications 2 à 6, comportant au moins un système flou ayant des entrées et des sorties et un système de contrôle de rang supérieur pour régler les paramètres du système flou, caractérisé en ce qu'un module (1) de logiciel effectuant la mise en logique floue comprend au moins une entrée (30) supplémentaire et en ce que les paramètres de la fonction d'appartenance, notamment les délimitations, peuvent être modifiés de manière adéquate par l'intermédiaire de cette entrée (30).

8. Dispositif suivant la revendication 7, caractérisé en ce que les pondérations de règles floues ou d'autres paramétrages des fonctions d'appartenance sont, par l'intermédiaire de l'entrée (30) supplémentaire, modifiés par des grandeurs de processus introduites.

9. Dispositif suivant la revendication 7, caractérisé en ce que le système de contrôle de rang supérieur est conçu comme système (2) d'optimisation.

10. Dispositif suivant la revendication 9, caractérisé en ce que le système (2) d'optimisation est réalisé en système expert et/ou en système flou et/ou en réseau neuronal et/ou en système à algorithme génétique.

11. Dispositif suivant la revendication 8, caractérisé en ce que le système (2) d'optimisation reçoit pour trouver une décision les valeurs d'entrée et/ou les valeurs de sortie du système (1) flou et/ou d'autres informations supplémentaires de processus.
